Europäisches Patentamt

European Patent Office

Office européen des brevets

(19)

(11) Veröffentlichungsnummer: **0 243 883**
**B1**

(12) **EUROPÄISCHE PATENTSCHRIFT**

(45) Veröffentlichungstag der Patentschrift: **29.08.90**

(51) Int. Cl.⁵: **B 60 R 22/36**

(21) Anmeldenummer: **87105968.9**

(22) Anmeldetag: **23.04.87**

(54) **Gurtaufroller.**

(30) Priorität: **26.04.86 DE 3614283**

(43) Veröffentlichungstag der Anmeldung:
**04.11.87 Patentblatt 87/45**

(45) Bekanntmachung des Hinweises auf die
Patenterteilung:
**29.08.90 Patentblatt 90/35**

(84) Benannte Vertragsstaaten:
**DE ES FR GB IT SE**

(56) Entgegenhaltungen:
**DE-A-2 826 286**
**DE-A-3 303 209**
**GB-A-1 022 344**
**US-A-3 471 100**

(73) Patentinhaber: **Autoflug GmbH & Co
Fahrzeugtechnik**
**Industriestrasse 10 Postfach 1180**
**D-2084 Rellingen 2 (DE)**

(72) Erfinder: **Singer, Klaus-Peter, Dipl.-Ing.**
**Tegelsbarg 77**
**D-2000 Hamburg 65 (DE)**

(74) Vertreter: **Müller, Karl-Ernst, Dr. et al
Patentanwälte Becker & Müller**
**Eisenhüttenstrasse 2**
**D-4030 Ratingen 1 (DE)**

Courier Press, Leamington Spa, England.

**Beschreibung**

Die Erfindung betrifft einen selbstsperrenden Gurtaufroller, insbesondere für Kraftfahrzeug-Sicherheitsgurte, mit einer in einem Gehäuse gelagerten, von einer Rückspulfeder beaufschlagten Gurtaufwickelwelle, bestehend aus einem Wellenkern und einem Kunststoff-Wellenkörper, der an jedem Ende zwei radial von innen nach außen wirkende, von gehäusefesten Anschlägen umgebene und eine symmetrisch-vierfache Verriegelung herbeiführende Sperrglieder zugeordnet sind, wobei die Sperrglieder durch der Wellenachse parallele, innerhalb des Wellenquerschnitts angeordnete und mit der Welle umlaufende Verbindungsstangen gekoppelt sind und mit den gehäusefesten Anschlägen bei Auslösung der Selbstsperrung über ein gurtband- und/oder fahrzeugsensitives System in Eingriff gelangen.

Ein gattungsgemäßer Gurtaufroller ist aus der DE-OS 28 26 286 bekannt; bei dem dort beschriebenen Gegenstand sind auf jeder Seite des Gurtaufrollers je zwei gesonderte Sperrglieder angeordnet, die federbelastet durch eine Drehung einer zugeordneten Verbindungsstange radial nach außen bis zum Eingriff in die gehäusefeste Verzahnung bewegt werden. Die die Sperrglieder aus der Sperrstellung rückführende Kraft wird dabei über eine die beiden Sperrglieder unmittelbar koppelnde Feder aufgebracht.

Mit dieser bekannten Anordnung ist der Nachteil verbunden, daß an den beiden Verbindungsstangen an jeder Seite je ein Sperrglied befestigt werden muß, was neben einem vergleichsweise großen Materialaufwand auch hohe Anforderungen an die Genauigkeit in der Bestimmung der Stellung der Sperrglieder zu den zugehörigen Verbindungsstangen stellt, da nur bei exakt symmetrischer Ausbildung ein einwandfreies Arbeiten der Sperrglieder gewährleistet ist. Hinzu kommt, daß das Ansteuerungselement in Form einer Steuerscheibe neben den Sperrgliedern anzuordnen ist, wodurch eine entsprechende Baubreite des Gurtaufrollers erforderlich ist. Auch stellt die Rückführung der Sperrglieder nur über die diese verbindenden Federn keinen synchronen Ablauf der Deblockierung sicher, was die Funktionssicherheit des Gurtaufrollers beeinträchtigen kann.

Der Erfindung liegt daher die Aufgabe zugrunde, einen gattungsgemäßen Gurtaufroller derart zu verbessern, daß bei gering gehaltener Baubreite die Sperrgliedgestaltung vereinfacht und insbesondere ein synchrones Verhalten beim Blockieren und Deblockieren erreicht sind.

Die Lösung dieser Aufgabe ergibt sich einschließlich vorteilhafter Ausgestaltungen und Weiterbildungen aus dem Inhalt der Patentansprüche, welche dieser Beschreibung vorangestellt sind.

Mit der Erfindung ist zunächst der Vorteil verbunden, daß sich insoweit eine besonders einfache Sperrgliedgestaltung ergibt, als nunmehr Verbindungsstangen und als Sperrglieder wirkende Teile einstückig hergestellt und als solche in den Kunststoffkörper der Welle einklipsbar sind; damit ist eine absolute Synchronität beim Blockieren des Gurtaufrollers gewährleistet, da die Sperrgliedgestaltungen immer in dem gleichen geometrischen Verhältnis zur Verbindungsstange stehen. Infolge der Abstützung der Sperrgliedgestaltungen an der gehäusefesten Verzahnung einerseits und an dem kraftaufnehmenden Wellenkern andererseits ist sichergestellt, daß in vorteilhafter Weise die Lagerung der Sperrglieder in Form der Verbindungsstangen im Blockierfall von einer Belastung durch das von der Welle auf das Gehäuse zu übertragende Drehmoment frei ist.

Die einstückige Verbindung zweier, zu beiden Seiten eines Gurtaufrollers angeordneter Sperrglieder mit einer parallel zur Welle verlaufenden Verbindungsstange ist aus der DE-A-3 303 209 bekannt, die einen Gurtaufroller mit außerhalb des Wellenprofils im Gurtaufrollergehäuse gelagerten Sperrgliedern beschreibt, die zum Blockieren der Welle in eine wellenfeste Verzahnung einschwenken; bei dem bekannten Gurtaufroller fehlt es jedoch an einem Wellenkern und an einem funktionellen Zusammenwirken der Sperrglieder mit einem solchen Kern.

Weiterhin ist mit der erfindungsgemäßen Sperrgliedgestaltung der Vorteil verbunden, daß die Verbindungsstangen und deren als Sperrglieder wirkende Abkröpfungen in einem einfach herzustellenden und bei der Montage zu handhabenden runden Querschnitt gehalten und demzufolge auch die gehäusefeste Verzahnung mit halbrunden Zahnflanken gestaltet sein können, was weniger Aufwand bei deren Fertigung erfordert.

Nach einem bevorzugten Ausführungsbeispiel der Erfindung ist vorgesehen, daß die U-förmig von den Verbindungsstangen abgekröpften Sperrglieder die Steuerscheibe des gurtband- bzw. fahrzeugsensitiven Systems zweifach, also diese in sich einfassend, durchgreifen, so daß die Steuerscheibe nun wesentlich dichter an die Sperrgliedgestaltungen heranrückt, so daß hierdurch die Baubreite des Gurtaufrollers verringert ist. Zusätzlich ergibt sich auf der betreffenden Seite des Gurtaufrollers eine entsprechend gerichtete Rückführung der Sperrglieder beim Deblockieren.

Zusätzlich kann nach einem Ausführungsbeispiel der Erfindung vorgesehen sein, auf der der Steuerscheibenseite entgegengesetzten Seite des Gurtaufrollers eine zusätzliche Rückstellscheibe anzuordnen, welche die zielgerichtete und damit zur Steuerscheibenseite synchrone Rückführung der Sperrglieder unterstützt. Auch diese Rückstellscheibe wird in gleicher Weise wie die Steuerscheibe von den U-förmigen Sperrgliedgestaltungen zweifach durchgriffen, so daß sich ein geringer Bedarf an Baubreite ergibt. Die Rückstellscheibe ist gegen den Wellenkörper federbelastet, so daß bei Entlastung der Welle vom Gurtbandzug die Sperrglieder über entsprechend angeordnete Schrägen in den Durchbrüchen der Rückstellscheibe in die Ausgangsposition rückgeführt werden.

Im Hinblick auf die Montage des Gurtaufrollers kann es nach der Erfindung weiterhin zweckmäßig sein, den Kunststoffkörper mit den Ausnehmungen zur Aufnahme der Verbindungsstangen und deren Abkröpfungen zweiteilig auszubilden und beim Zusammenfügen der Halbschalen um den flach-rechteckigen Stahlkern weiterhin die Lagervorrichtungen für die Welle einzulegen.

In der Zeichnung sind Ausführungsbeispiele der Erfindung wiedergegeben, welche nachstehend beschrieben sind.

Es zeigen:

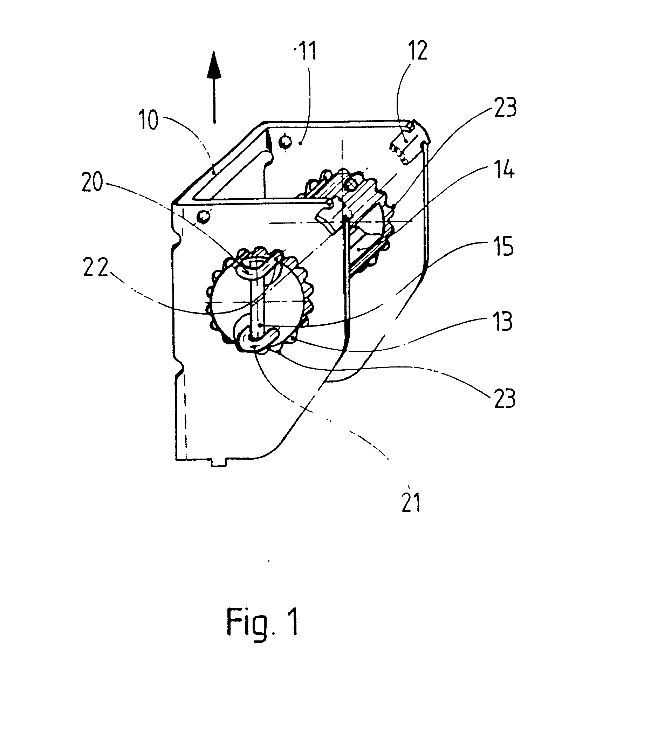

Fig. 1 einen selbstsperrenden Gurtaufroller in einer schaubildlichen Darstellung,

Fig. 2 den Gurtaufroller in einer schematisierten Seitenansicht,

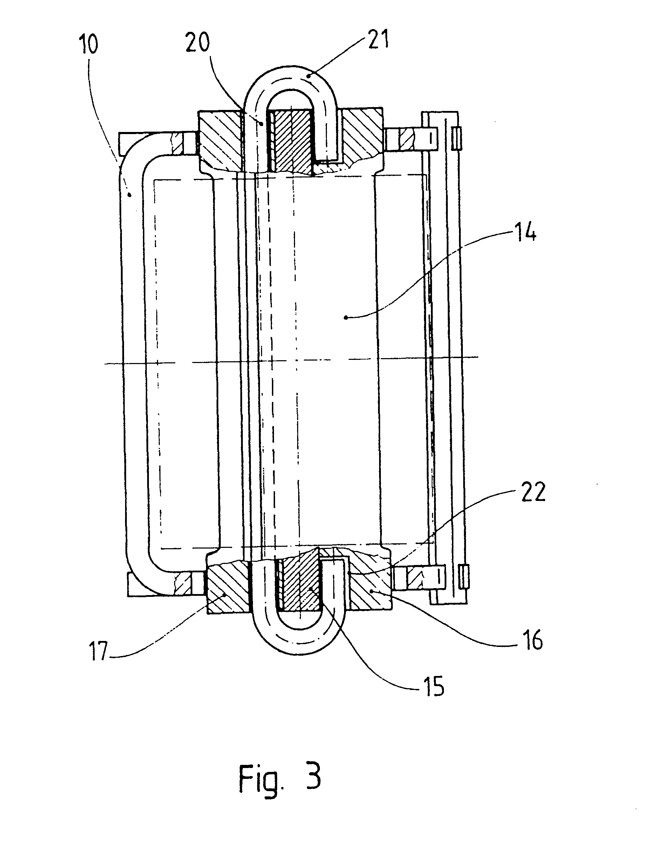

Fig. 3 den Gurtaufroller entsprechend Figur 2 in einer Aufsicht,

Fig. 4 eine Seitenansicht der Systemseite des Gurtaufrollers, teilweise geschnitten,

Fig. 5 die Systemseite in einen Längsmittenschnitt,

Fig. 6 die Systemseite in einer weiteren Schnittdarstellung,

Fig. 7 die Federseite mit Rückstellscheibe in einer Seitenansicht, teilweise geschnitten,

Fig. 8 die Federseite in einem Längsmittenschnitt,

Fig. 9 eine schematisierte Aufsicht auf das Wellenprofil mit Verbindungsstangen,

Fig. 9a eine Vorderansicht des Gegenstandes gemäß Figur 9,

Fig. 10 ein anderes Ausführungsbeispiel entsprechend der Darstellung in Figur 9,

Fig. 10a eine teilweise Vorderansicht des Gegenstandes gemäß Figur 10.

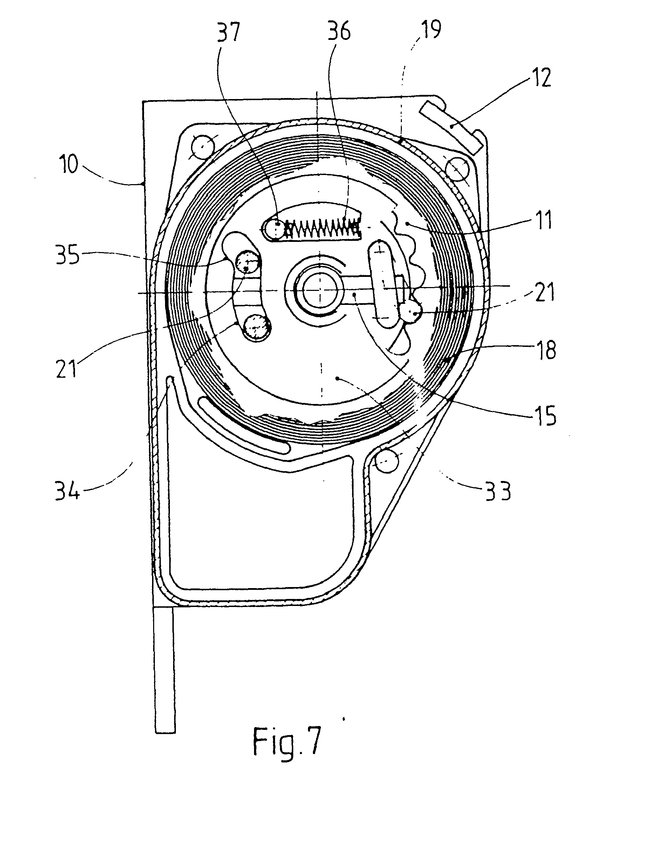

Der Gurtaufroller weist ein C-förmiges Gehäuse 10 mit zwei Seitenplatten 11 auf, die durch eine an der offenen Gehäuseseite angeordnete Distanzstange 12 in vorgegebenem Abstand gehalten sind. In Öffnungen 13 in den Seitenplatten 11 ist eine Gurtaufwickelwelle 14 drehbar gelagert, auf der im einzelnen nicht dargestelltes Gurtband aufgewickelt ist. Die Gurtaufwickelwelle 14 besteht aus einem flach-rechteckigen Stahlblech 15 als Kern und zwei Halbschalen 16, 17 eines Wellen-Kunststoffkörpers. An dem über die eine Seitenplatte hinausragenden Ende ist die Welle 14 mit einer Aufwickelfeder 18 (Figur 7) gekoppelt, die andererseits an einer Kunststoffabdeckung 19 befestigt ist.

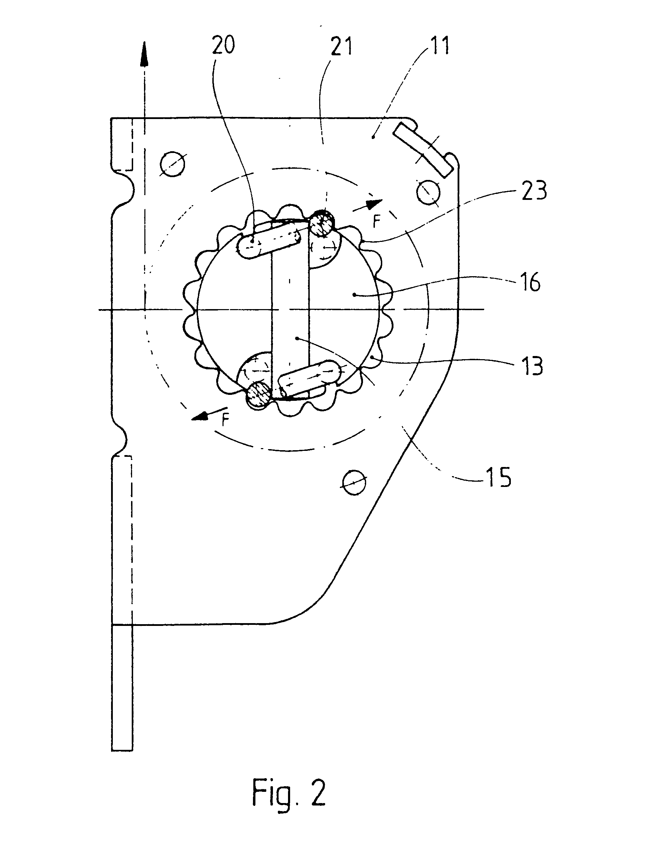

In den Halbschalen 16, 17 ist an den beiden Enden des Stahlkerns 15 je eine Verbindungsstange 20 angeordnet, die mit ihrem runden, längs des Stahlkerns 15 verlaufenden Abschnitt formschlüssig in das Halbschalenprofil drehbar eingeklipst sind. An den beiden äußeren Enden sind die Verbindungsstangen 20 U-förmig umgebogen, wobei die so gebildeten Sperrelemente darstellenden Abkröpfungen 21 den Stahlkern 15 symmetrisch umfassen und auf der zur zugehörigen Verbindungsstange 20 gegenüberliegenden Seite bzw. Halbschale 16, 17 in einer dort entsprechend ausgebildeten Ausnehmung 22 im Wellenprofil eingepaßt sind. Das Maß der Umbiegung entsprechend dem ebenen Abstand zwischen Verbindungsstange 20 und Abkröpfung 21 und die Anordnung der Verbindungsstangen 20 zum Stahlkern 15 der Gurtaufwickelwelle 14 ist dabei so gewählt, daß die Abkröpfungen 21 über die Kontur des Stahlkernes 15 hinaus radial auswärts drehbar sind und daß bei in die Blockierstellung ausgelenktem Zustand (Figur 2) der projizierte Abstand von Verbindungsstange 20 zur Abkröpfung 21 der Stärke des Wellenkerns 15 entspricht. In den Lageröffnungen 13 der Seitenplatten 11 des Gehäuses ist eine Umfangsverzahnung 23 mit entsprechend dem runden profil der zum Eingriff in die Verzahnung 23 eingerichteten Abkröpfungen 21 gerundeten Zahnflanken ausgebildet.

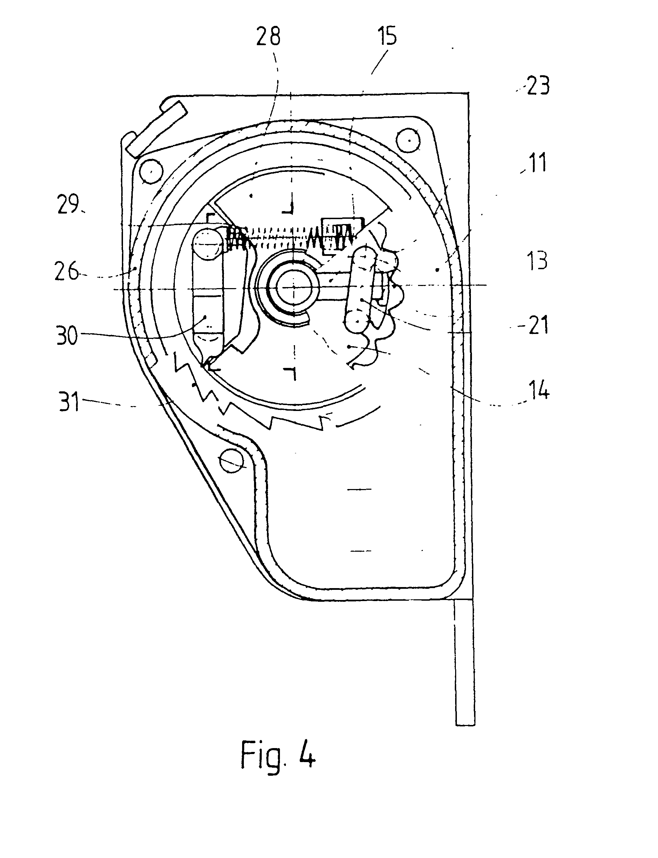

In den Figuren 4 — 6 ist die sogenannte Systemseite des Gurtaufrollers dargestellt, auf welcher das gurtband- bzw. fahrzeugsensitive Steuersystem für die Auslenkung der als Sperrglieder wirkenden Abkröpfungen 21 der Verbindungsstange 20 in deren Blockierstellung vorgesehen ist; derartige Systeme sind in Aufbau und Wirkungsweise bekannt, beispielsweise aus dem DE-GM 74 25 531. Hervorzuheben ist hier, daß eine Zahnlückensteuervorrichtung vorgesehen ist, wie sie nach Aufgabe und Wirkungsweise im einzelnen in der DE-OS 28 17 214 beschrieben ist, da insbesondere im Hinblick auf eine synchrone Verriegelung des Gurtaufrollers an vier Stellen die Vermeidung von Zahn-auf-Zahn-Blockierungen von besonderer Bedeutung ist.

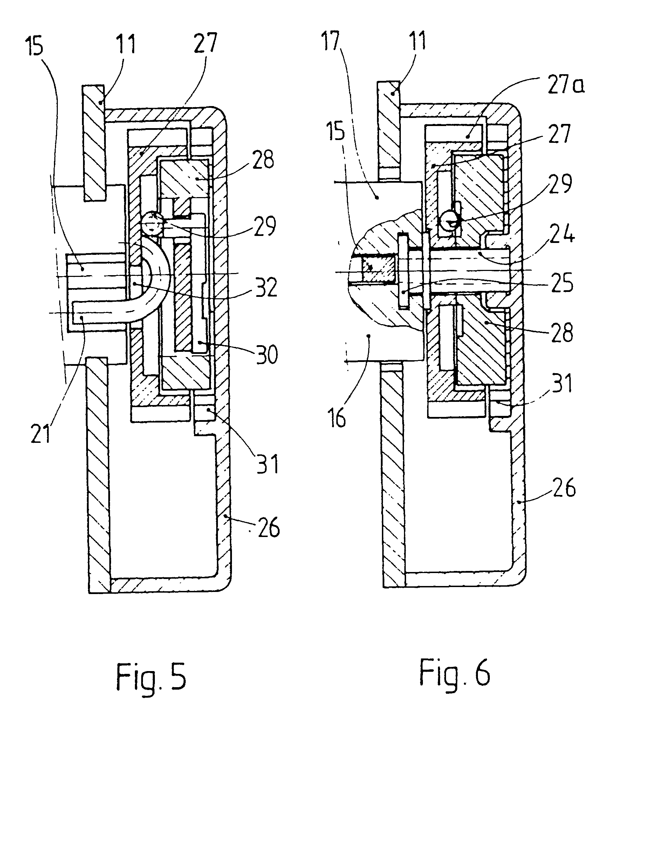

Wie sich insbesondere aus Figur 6 entnehmen läßt, setzt sich die Welle 14 über die Seitenplatte 11 mit einem Lagerzapfen 24 fort, der mit einem Flansch 25 zwischen die Halbschalen 16, 17 des Wellenkörpers 14 eingepaßt und in montiertem Zustand von diesen eingeschlossen und gehalten wird. Die Welle 14 ist mit dem Lagerzapfen 24 in einer Gehäuseabdeckung 26 gelagert, die an der Seitenplatte 11 befestigt ist.

Auf dem Lagerzapfen 24 sind nebeneinander eine Steuerscheibe 27 und eine Trägheitsmasse 28 mit der Welle 14 drehend gelagert, die über eine als g-Wert-Feder wirkende Feder 29 gegeneinander belastet sind. Zur Zahnlückeneinsteuerung ist an der Steuerscheibe 27 ein Steuerhebel 30 angeordnet, der bei gegenseitiger Verdrehung von Trägheitsmasse 28 und Steuerscheibe 27 von ersterer in eine umlaufende Innenverzahnung 31 der Gehäuseabdeckung 26 eingesteuert wird und so die Steuerscheibe 27 in jeweils definierter Position in ihrer weiteren Drehung festhält. Hierzu und insbesondere im Hinblick auf die Aufnahme der Abkröpfungen 21 ist die Trägheitsmasse symmetrisch-pendelartig mit zwei T-förmigen Ausschnitten über den Enden des Wellenkerns 15 ausgebildet (Figur 4). Weiterhin weist die Steuerscheibe 27 eine Außenverzahnung 27a auf, die mit einem nicht dargestellten fahrzeugsensitiven System im Sinne eines Anhaltens der Drehbewegung der Steuerscheibe 27 zusammenwirkt.

Wie sich aus Figur 5 ergibt, durchgreifen die Verbindungsstangen 20 mit den U-förmigen Abkröpfungen 21 die Steuerscheibe je zweifach, so daß die Steuerscheibe 27 unmittelbar neben dem Ende der Welle 14 gelagert ist. Während der Durchgriff der Verbindungsstange 20 durch die Steuerscheibe 27 ohne radiales Spiel ausgebildet sein kann, ist zur Ansteuerung der radial ausschwenkbaren Abkröpfung 21 aus dem Wellenprofil 16, 17 heraus in die Sperrlage mit Eingriff in die Gehäuseverzahnung 23 die zugeordnete Durchgriffsöffnung 32 mit radialem Spiel ausgebildet, so daß eine Relativbewegung der Steuerscheibe 27 gegenüber dem Wellenprofil 14 ein radiales Ausschwenken der Abkröpfung 21 bewirkt, indem die Steuerlücke 32 die radiale Auslenkung herbeiführt.

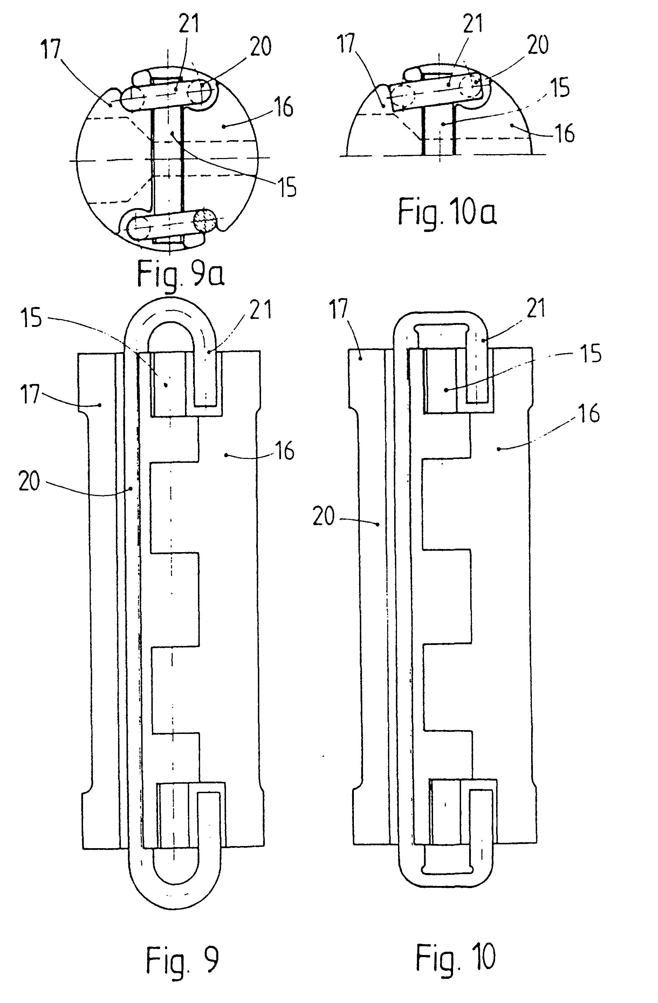

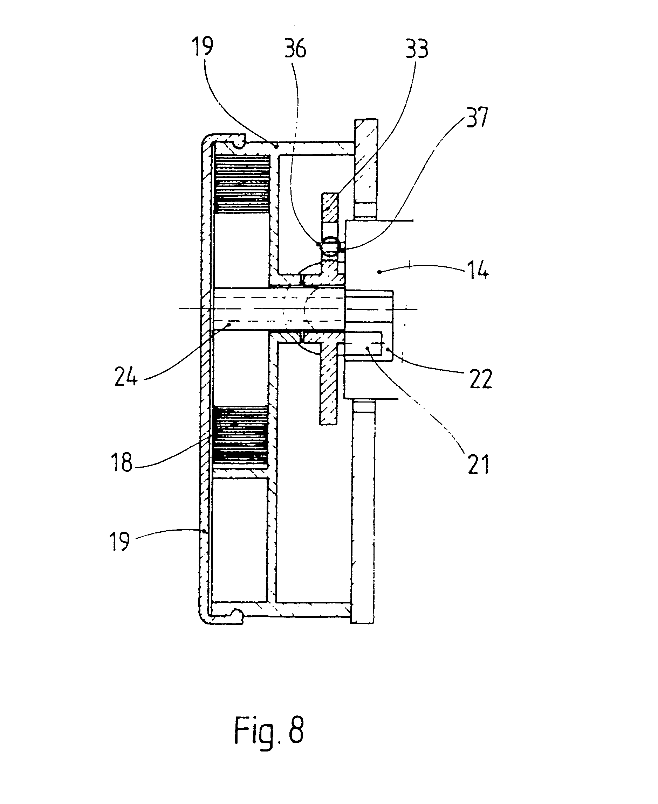

In den Figuren 7 und 8 ist die der beschriebenen Systemseite gegenüberliegende Seite des Gurtaufrollers mit der Aufwickelfeder 18 dargestellt. An dieser Seite ist zusätzlich eine Rückstellscheibe 33 für die Sperrglieder 21 angeordnet, und zwar unter dem Symmetriegesichtspunkt in gleicher Weise wie die Steuerscheibe 27. Auch die Rückstellscheibe 33 wird von den Verbindungsstangen 20 mit Abkröpfungen 21 jeweils symmetrisch zweifach in Durchbrüchen 34 durchgriffen, so daß auch die Rückstellscheibe 33 unmittelbar neben dem Wellenende angeordnet und gelagert ist. Im Bereich der ausschwenkbaren Abkröpfung 21 geht jeder Durchbruch 34 der Rückstellscheibe 33 in eine der Sperrlage der Sperrglieder 21 entsprechend radial auswärts gerichtete Schräge 35 über, wobei die Übergänge derart gerundet ausgebildet sind, daß sich eine leichte Führung der Abkröpfungen 21 in Durchbrüchen 34 und zugeordneten Schrägen 35 ergibt. Die Rückstellscheibe 33 ist über eine Feder 36 belastet an die Welle 14 gekoppelt, die sich über einen an der zugeordneten Halbschale 16, 17 angeordneten Zapfen 37 abstützt.

Der so dargestellte selbstsperrende Gurtaufroller arbeitet folgendermaßen: Im Normalbetrieb läßt sich das Gurtband von der Welle 14 abziehen, bzw. wickelt sich darauf auf, wobei die in ihrer Drehbewegung an die Welle 14 gekoppelten Bauteile, nämlich Rückstellscheibe 33 einerseits sowie Steuerscheibe 27 und Trägheitsmasse 28 andererseits mit der Welle 14 mitdrehen. Kommt es aufgrund einer oberhalb der Ansprechschwelle der g-Wert-Feder 29 liegenden Gurtbandbeschleunigung zu einer entsprechenden Wellenbeschleunigung, so ist die Folge eine relative Verdrehung von Steuerscheibe 27 und Trägheitsmasse 28 gegeneinander, wobei die Trägheitsmasse 28 für eine Auslenkung des Hebels 30 in die Verzahnung 31 der Gehäuseabdeckung sorgt, wodurch der Eingriff des Hebels 30 in die besagte Verzahnung sodann eine weitere Drehung der Steuerscheibe 27 an definierter Stelle verhindert. Ein entsprechender Stop der Drehbewegung der Steuerscheibe 27 wird bei Ansprechen des nicht dargestellten fahrzeugsensitiven Systems durch einen Eingriff eines sensorgesteuerten Hebels in die Außenverzahnung 27a der Steuerscheibe 2 bewirkt.

Die so zustandegekommene relative Verdrehung von Steuerscheibe 27 und Welle 14 bewirkt nun durch Nachlauf der Steuerscheibe 27 eine radiale Auslenkung der Abkröpfungen 21 in die gehäusefeste Verzahnung 23, indem die Durchgriffsöffnungen 32 der Steuerscheibe 27 die Sperrglieder 21 radial nach außen in die gerundete Verzahnung 23 führen. Gleichzeitig bewirkt die radiale Auslenkung der Sperrglieder 21 auch eine Verdrehung der Rückstellscheibe 33 gegenüber der Welle 14 entgegen der Kraft der Feder 36, indem die Abkröpfungen 21 von den Durchbrüchen 34 in die Schrägen 35 eintreten.

Bei Entlastung des Systems ergibt sich nun auf der Federseite des Gurtaufrollers eine Rückführung der Abkröpfungen 21 über die Schrägen 35 in die Durchbrüche 34, indem die federbelastete Rückstellscheibe 33 die Ausgangslage gegenüber der Welle 14 wieder einnimmt. Gleichzeitig erfolgt auch eine gleichsinnig gerichtete Rückführung der Sperrglieder 21 über die Entlastung der Steuerscheibe 27.

Durch die symmetrische Blockierung an vier Stellen und die damit weiterhin gleichmäßige Krafteinleitung können die Gehäuse für die Gurtaufroller sehr klein gehalten werden, da einseitige Belastungen, Verdrehungen der Welle und eine punktförmige Belastung der Wellenlager infolge radialer Beanspruchung der Welle selbst nicht mehr auftreten. An den gegenüberliegenden Blockierstellen bilden sich gleiche Kräftepaare aus, was eine symmetrische Belastung herbeiführt.

Die einfache Herstellung der Drahtklinken als Verbindungsstangen 20 mit abgekröpften Sperrgliedgestaltungen 21 zeigt sich schließlich noch in den Figuren 9 und 9a, in denen auch die zweiteilige Wellenausführung deutlich zum Ausdruck kommt. Wie sich aus den Figuren 10 und 10a ergibt, lassen sich weitere Einsparungen an Baubreite des Gurtaufrollers dadurch erreichen, daß die Umbiegungen der Abkröpfungen 21 gegenüber den Verbindungsstangen 20 abgeflacht sind.

**Patentansprüche**

1. Selbstsperrender Gurtaufroller insbesondere für Kraftfahrzeug-Sicherheitsgurte, mit einer in einem Gehäuse (10) gelagerten, von einer Rückspulfeder beaufschlagten Gurtaufwickelwelle (14), bestehend aus einem Wellenkern und einem Kunststoff-Wellenkörper (16, 17), der an jedem Ende zwei radial von innen nach außen wirkende von gehäusefesten Anschlägen umgebene und eine symmetrisch-vierfache Verriegelung herbeifühende Sperrglieder (21) zugeordnet sind wobei die Sperrglieder durch der Wellenachse parallele, innerhalb des Wellenquerschnitts angeordnete und mit der Welle umlaufende Verbindungsstangen (20) gekoppelt sind und mit den gehäusefesten Anschlägen (23) bei Auslösung der Selbstsperrung über ein gurtband- und/oder fahrzeugsensitives System in Eingriff gelangen, dadurch gekennzeichnet, daß die Verbindungsstangen (20) an ihren Enden einstückig mit ihnen verbundene und den Wellenkern (15) zwischen sich und der Verbindungsstange (20) symmetrisch zur jeweiligen Verbindungsstange (20) einfassende Sperrelemente (21) aufweisen, die um die Längsachse der Verbindungsstangen (20) radial auswärts bis zum Eingriff in die gehäusefeste Verzahnung (23) schwenkbar sind.

2. Gurtaufroller nach Anspruch 1, dadurch gekennzeichnet, daß die Verbindungsstangen (20) an ihren Enden (21) U-förmig und dabei den in bekannter Weise flach rechteckig ausgebildeten Wellenkern (15) symmetrisch einfassend umgebogen und an den Enden des Wellenkerns (15) jeweils derart angeordnet sind, daß die Abkröpfungen (21) um die Längsachse der Verbindungsstangen (20) radial auswärts schwenkbar sind.

3. Gurtaufroller nach Anspruch 1 oder 2, dadurch gekennzeichnet, daß die Zuordnung der Sperrelemente (21) zur jeweiligen Verbindungsstange (20) derart bemessen ist, daß der Wellenkern (15) in blockiertem Zustand als Widerlager dient.

4. Gurtaufroller nach Anspruch 3, dadurch gekennzeichnet, daß das Maß der Umbiegung der Abkröpfung (21) derart gewählt ist, daß in blockiertem Zustand der projizierte Abstand von Verbindungsstange (22) zu Abkröpfung (21) der Stärke des Wellenkerns (15) entspricht.

5. Gurtaufroller nach Anspruch 1 bis 4, dadurch gekennzeichnet, daß die Verbindungsstangen (20) ein rundes Profil und die Sperrverzahnung (23) dem Stangenprofil entsprechend gerundete Zahnflanken aufweisen.

6. Gurtaufroller nach Anspruch 1 — 5, dadurch gekennzeichnet, daß die Abkröpfungen (21) in ihrem Biegeradius abgeflacht ausgebildet sind.

7. Gurtaufroller nach einem der Ansprüche 1 — 6, dadurch gekennzeichnet, daß eine an sich bekannte Vorrichtung (30, 31) zur zahngenauen Ansteuerung der Steuerscheibe (27) vorgesehen ist.

8. Gurtaufroller nach einem der Ansprüche 1 — 7, dadurch gekennzeichnet, daß die Abkröpfungen (21) der Verbindungsstangen (20) die Steuerscheibe (27) je zweifach durchgreifen, wobei zumindest die Durchgriffsöffnungen (32) für die als Sperrglied wirkenden Enden (21) der Verbindungsstangen (20) als schlitzartige Führung mit Spiel ausgebildet sind.

9. Gurtaufroller nach einem der Ansprüche 1 — 8, dadurch gekennzeichnet, daß auf der der Systemseite abgewandten Seite des Gurtaufrollers eine Rückstellscheibe (33) für die Sperrglieder (21) unter Federspannung (36) gegen den Wellenkörper (14) angeordnet ist.

10. Gurtaufroller nach Anspruch 9, dadurch gekennzeichnet, daß die Abkröpfungen (21) der Verbindungsstange (20) die Rückstellscheibe (33) je zweifach zu beiden Seiten des Wellenkerns (15) durchgreifen, wobei die Durchbrüche (34) für die als Sperrglieder wirkenden Abkröpfungen (21) der Verbindungsstangen (20) der ausgelenkten Sperrstellung entsprechend radial auswärts gerichtete Schrägen (35) aufweisen.

11. Gurtaufroller nach Anspruch 10, dadurch gekennzeichnet, daß die Durchbrüche (34) und die Schrägen (35) mit gerundeten Kanten ineinander übergehen, um ein Gleiten der Abkröpfungen (21) der Verbindungsstangen (20) von der einen Endstellung in die andere zu erleichtern.

12. Gurtaufroller nach Anspruch 8 und einem der Ansprüche 9 — 11, dadurch gekennzeichnet, daß die Steuerscheibe (27) in gleicher Weise wie bei der Rückstellscheibe (33) ausgebildete Steuerschlitze mit Schrägen auf weist.

13. Gurtaufroller nach einem der Ansprüche 9 — 12, dadurch gekennzeichnet, daß das Wellenprofil (16, 17) mit einem Zapfen (37) versehen ist, an dem die Feder (36) eingehängt ist, welche mit ihrem anderen Ende an der Rückstellscheibe (33) befestigt ist.

14. Gurtaufroller nach einem der Ansprüche 1 — 13, dadurch gekennzeichnet, daß die Welle (14) aus zwei Halbschalen (16, 17) gebildet ist, die den flach-rechteckigen Stahlkern (15) sowie die Lagervorrichtungen (24, 25) zwischen sich einschließen.

**Revendications**

1. Enrouleur de ceinture autobloquant, en particulier pour ceintures de sécurité de véhicule automobile, comportant un arbre d'enroulement de ceinture (14), monté dans un boîtier (10), soumis à l'action d'un ressort de rappel et constitué d'un noyau d'arbre et d'un corps d'arbre en matière plastique (16, 17), auquel sont associés à chaque extrémité, deux organes de blocage agissant de l'intérieur vers l'extérieur, entourés par des butées solidaires du boîtier et entraînant un verrouillage quadruple, symétrique, les organes de verrouillage étant accouplés à des tringles de liaison (20) parallèles à l'axe de l'arbre, placées à l'intérieur de la section transversale de l'arbre et tournant avec celui-ci et venant en prise avec les butées (23) solidaires du boîtier, lors du déclenchement de l'autoblocage, par l'intermédiaire d'un système réagissant à la sangle de ceinture et/ou au véhicule, caractérisé en ce que les tringles de liaison (20) présentent à leurs extrémités, des éléments de blocage (21) réalisés d'une seule pièce avec les tringles de liaison et en serrant, entre elles-mêmes et la tringle de liaison (20), le noyau d'arbre (15), de manière symétrique par rapport à la tringle de liaison (20) concernée, ces éléments de blocage pouvant pivoter autour de l'arbre longitudinal des tringles de liaison (20), radialement vers l'extérieur, jusqu'à venir en prise avec la denture (23) solidaire du boîtier.

2. Enrouleur de ceinture selon la revendication 1, caractérisé en ce que les tringles de liaison (20) sont en U à leurs extrémités (21) et recourbées pour entourer de manière symétrique, le noyau d'arbre (15) qui, de façon connue, est rectangulaire et plat et sont disposées, aux extrémités du noyau d'arbre (15), de manière que les coudes (21) puissent pivoter radialement vers l'extérieur, autour de l'axe longitudinal des tringles de liaison (20).

3. Enrouleur de ceinture selon la revendication 1 ou 2, caractérisé en ce que l'association des éléments de blocage (21) à la tringle de liaison (20) respective est telle que le noyau d'arbre (15) sert de butée à l'état bloqué.

4. Enrouleur de ceinture selon la revendication 3, caractérisé en ce qu'on choisit la valeur de courbure du coude (21), de manière qu'à l'état bloqué, la distance projetée entre la tringle de liaison (22) et le coude (21), corresponde à l'épaisseur du noyau d'arbre (15).

5. Enrouleur de ceinture selon l'une quelconque des revendications 1 à 4, caractérisé en ce que les tringles de liaison (20) ont un profil arrondi et la denture de blocage (23) présente des flancs de dents arrondis, correspondant au profil de la tringle.

6. Enrouleur de ceinture selon l'une quelconque des revendications 1 à 5, caractérisé en ce que les coudes (21) ont un rayon de courbure aplati.

7. Enrouleur de ceinture selon l'une quelconque des revendications 1 à 6, caractérisé en ce qu'on prévoit un dispositif (30, 31), connu en soi, pour commander, de manière précise en ce qui concerne les dents, le disque de commande (27).

8. Enrouleur de ceinture selon l'une quelconque des revendications 1 à 7, caractérisé en ce que les coudes (21) des tringles de liaison (20) traversent deux fois chacun le disque de commande (27), les ouvertures de passage (32) étant des fentes assurant un guidage avec un certain jeu pour les extrémités (21) des tringles de liaison (20), servant d'organes de blocage.

9. Enrouleur de ceinture selon l'une quelconque des revendications 1 à 8, caractérisé en ce que, sur le côté de l'enrouleur de ceinture, opposé au côté système, on place un disque de rappel (33) pour les organes de blocage (21), par tension de ressort (36) contre le corps d'arbre (14).

10. Enrouleur de ceinture selon la revendication 9, caractérisé en ce que les coudes (21) de la tringle de liaison (20) traversent chacun deux fois le disque de rappel (33), de part et d'autre du noyau d'arbre (15), les ajours (34) destinés aux coudes (21) des tringles de liaison (20), servant d'organes de blocage, présentant des surfaces obliques (35), dirigées radialement vers l'extérieur, conformément à la position de blocage déviée.

11. Enrouleur de ceinture selon la revendication 10, caractérisé en ce que les ajours (34) et les surfaces obliques (35) se prolongent l'un par l'autre, par des bords arrondis, afin de faciliter un glissement des coudes (21) des tringles de liaison (20), d'une position de fin de course à l'autre.

12. Enrouleur de ceinture selon la revendication 8 et l'une quelconque des revendications 9 à 11, caractérisé en ce que le disque de commande (27) présente des fentes de commande avec surfaces obliques, comme le disque de rappel (33).

13. Enrouleur de ceinture selon l'une quelconque des revendications 9 à 12, caractérisé en ce que le profil d'arbre (16, 17) est pourvu d'un tenon (37) auquel est accroché le ressort (36) qui, par son autre extrémité, est fixé sur le disque de rappel (33).

14. Enrouleur de ceinture selon l'une quelconque des revendications 1 à 13, caractérisé en ce que l'arbre (14) est formé par deux demi coques (16, 17) qui enferment entre elles le noyau d'acier (15) plat et rectangulaire, ainsi que les dispositifs de support (24, 25).

**Claims**

1. A self-locking belt rewinding device, in particular for motor vehicle safety belts, comprising, accommodated in a casing (10), a belt rewinding shaft (14), spring-loaded by a rewinding spring and comprising a shaft core and a plastics shaft body (16, 17) and which at each end is associated with two locking members (21) radially acting from inside in an outward direction, surrounded by stop means fixed to the casing and adapted to bring about a fourfold-symmetrical locking effect, the locking members being coupled by way of connecting rods (20) parallel to the shaft axis, accommodated within the shaft cross section and revolving jointly with the shaft, the locking members entering into engagement with the stop members (23) fixed to the casing when the self-locking mechanism is triggered by way of a system which is sensitive to the belt and/or the vehicle, characterised in that the connecting rods (20) at their ends comprise locking members (21), connected in one piece to the rods (20) and embracing the shaft core (15) between themselves and the connecting rod (20) symmetrically in relation to the respective connecting rod (20), the locking members (21) being adapted to be pivoted about the longitudinal axis of the connecting rods (20) radially outwardly until they engage into the tooth formations (23) which are fixed in relation to the casing.

2. Belt rewinding device according to claim 1, characterised in that the connecting rods (20) are bent around U-shaped at their ends (21) so as to embrace symmetrically the shaft core (15) which in a known manner is of flat rectangular configuration and are so provided on the ends of the shaft core (15) that the bent around portions (21) can be radially swung outward about the longitudinal axis of the connecting rod (20).

3. Belt rewinding device according to claim 1 or 2, characterised in that the association of the locking members (21) with the respective connecting rod (20) is so dimensioned that the shaft core (15) serves as a support in the blocked condition.

4. Belt rewinding device according to claim 3, characterised in that the degree of bending around of the bent regions (21) is so selected that in the blocked condition the projected distance from the connecting rod (22) to the bent around portion (21) corresponds to the thickness of the shaft core (15).

5. Belt rewinding device according to claims 1 to 4, characterised in that the connecting rods (20) have a round profile and the locking tooth formations (23) have rounded tooth profiles corresponding to the rod profile.

6. Belt rewinding device according to claims 1-5, characterised in that the bent around portions (21) are flattened in their bent region.

7. Belt rewinding device according to any one of claims 1 — 6, characterised in that a means (30, 31) known per se is provided for guiding the control disc (27) in accurate relationship to the teeth.

8. Belt rewinding device according to any one of claims 1 — 7, characterised in that the bent around regions (21) of the connecting rods (20) each pass through the control disc (27) twice, at least the passage apertures (32) for the ends (21) acting as locking members of the connecting rods (20) are designed as slot-like guide means with a tolerance.

9. Belt rewinding device according to any one of claims 1 — 8, characterised in that on that side of the belt rewinding device which is opposite to the operative side a return disc (33) is provided for the locking members (21), being spring-loaded (36) in relation to the shaft body (14).

10. Belt rewinding device according to claim 9, characterised in that the bent around portions (21) of the connecting rods (20) each pass through the return disc (33) twice on both sides of the shaft core (15), the passages (34) for the bent around portions (21) acting as locking members of the connecting rods (20) comprising outwardly directed inclined regions (35) corresponding to the swung-out locking position.

11. Belt rewinding device according to claim 10, characterised in that the passages (34) and the inclined regions (35) merge one into the other via rounded outlines in order to facilitate sliding of the bent around portions (21) of the connecting rods (20) from the one terminal position into the other.

12. Belt rewinding device according to claim 8 and any one of claims 9 — 11, characterised in that the control disc (27) comprises control slots with inclined regions in the same manner as does the return disc (33).

13. Belt rewinding device according to any one of claims 9 — 12, characterised in that the shaft profile (16, 17) is provided with a pin (37) to which the spring (36) is attached which at its opposite end is fitted to the return disc (33).

14. Belt rewinding device according to any one of claims 1 — 13, characterised in that the shaft (14) is formed by two half shells (16, 17) which enclose the steel core (15) of flat rectangular configuration as well as the bearing devices (24, 25) therebetween.

Fig. 1

Fig. 2

2

Fig. 3

Fig. 4

Fig. 5

Fig. 6

Fig.7

Fig. 9a

Fig. 10a

Fig. 9

Fig. 10

Fig. 8